# EUROPEAN PATENT APPLICATION

(11) **EP 2 846 553 A1**
(43) Date of publication of application: **11.03.2015**
(21) Application number: 13183566.2
(22) Date of filing: 09.09.2013
(51) Int. Cl.: H04N 21/2665, H04N 21/462, H04N 21/482, H04N 21/81, G06Q 50/00

(54) **Media system and method for providing enhanced message list**

(71) Applicant: TP Vision Holding B.V., 1097 JB Amsterdam (NL)
(72) Inventor: Bijsterveld, Marcel, 1097JB Amsterdam (NL); Van Craenendonck, Toon, 1097JB Amsterdam (NL)
(74) Representative: Busch, Patrick

(57) **Abstract**

The invention provides a media system (100, 110) comprising a processing unit (14) and a network interface (15) for connecting to a network (200), wherein the processing unit (14) is configured to:
- receive a message (34) from the network (200);
- identify at least one topic in the message;
- search content sources for content matching the at least one identified topic.

The media system is configured to provide a user interface element (35, 36) for allowing a user to instruct the media system to start receiving the content matching the at least one identified topic. The invention also provides a method for displaying a message and a storage medium comprising machine readable instructions implementing the method for displaying a message.

## Description

### Field of the invention

The invention relates to a system and method for providing an enhanced message list. The invention further relates to a media system, a media device, and a server for providing an enhanced message list.

### Background of the invention

Many Smart TVs are nowadays able to run applications with Social Media functionality. For example, it is possible to display messages received via the internet on a Smart TV. These messages can in principle be any type of digital message, for example emails, instant messages, tweets (Twitter messages), Facebook updates, etc. Often these messages relate to broadcast content or content that is otherwise available to the television viewer.

it is a goal of this invention to provide a method and system that allow a user easier access to content of interest.

### Summary of the invention

Nowadays, Social TV is gaining popularity. A lot of social interaction regarding TV content takes place on the World Wide Web. Many people make use of the advantages that the social network Twitter has. For example, when a specific TV show is playing, they share their thoughts regarding that show by making use of Twitter messages with hashtags included. A hashtag is a word tagged with a prefix that is added to a Twitter message (tweet). This results in the possibility to group specific items. E.g. during the TV show 'The Simpsons', the hashtag #thesimpsons will be used. In this way, a user can look up all information about 'The Simpsons' by aggregating all #thesimpsons hashtags. When the show is broadcast a lot of Twitter activity takes place about the show. In this way users share their thoughts regarding The Simpsons.

The invention provides a media system comprising a processing unit and a network interface for connecting to a network, wherein the processing unit is configured to:
- receive a message from the network;
- identify at least one topic in the message;
- search content sources for content matching the at least one identified topic;
- provide a user interface element for allowing a user to instruct the media system to start receiving the content matching the at least one identified topic.

The media system can be a single device, such as a television. In this case, the single device comprises the processing unit, network interface, and any means necessary for presenting and facilitating a user interface. The media system can also be a set-top box (STB), connectable to a connected display. In this case the processing unit and network interface are included in the STB, while the user interface is presented by the STB using the connected display and user inputs are handled by the STB. The media system can also be a distributed system, comprising a user device such as the aforementioned television, STB, or alternatively a PC, portable computer, mobile phone, etc in connection with a server device. In the distributed system, the server device (e.g. a server on the internet, possibly a virtual server as part of a cloud service) includes the processing unit and network interface. The server devices sends the received messages and references to matching content to a media device (user device). The media device then presents the user interface and handles user input, e.g. by starting to receive matching content if the user so chooses. In another embodiment, the server receives the messages and sends them on to the media device which searches for matching content and presents the user interface. Communications between server device and media device can be initiated by the server (pushing) or by the receiving media device (polling or pulling).

In summary, the system can comprise a media device or it can be a media system including a media device and a server device, wherein the media device and server device are connected via a network. Examples of a media device are a television, a set-top-box, or a game console. In general, any media device capable of receiving video content and capable of receiving messages via a network can be configured to function according the invention. The identification of the at least one topic in the message, done by either the media device or a server device, is preferably automatic, that is, not requiring human intervention.

Advantages of the invention will be illustrated by referring to Twitter messages, however the invention is not limited to Twitter messages.

The invention helps a user to find specific content when there is activity on, for example, Twitter regarding the show by means of, for example, the use of Twitter's hashtags. When there is for example activity on the user's Twitter feed regarding The Simpsons (#thesimpsons), the system can identify in the EPG if the show is playing. Alternatively or in addition, the system can scan if there is on demand content or catch up TV content available regarding The Simpsons. If so, the Twitter stream as shown to the user will indicate this by means of showing an appropriate icon next to the tweet.

In an embodiment according the invention, the processing unit is configured to display the message and the user interface element on a display of the media device.

In an embodiment according the invention, a broadcasting content source is searched. A broadcasting content source can be an installed broadcasting channel, a Digital Video Broadcasting (DVB) service, Internet Protocol broadcasting (IPTV), a free-to-air or subscription-based broadcasting service or channel, etc. In an embodiment according the invention, searching a broadcasting content source comprises searching an Electronic Program Guide, EPG.

In an embodiment according the invention, an on-demand content source is searched. An on-demand content source can be a PayTV system, a video-on-demand (VoD) catalogue, a ctch-up TV catalogue, a website, etc. In an embodiment according the invention, the media system (for example the media device in the user's environment) comprises a Conditional Access Module, CAM, and searching an on-demand content source comprises starting a CAM application.

In an embodiment according the invention, the user interface element controls starting a CAM application for receiving on-demand content. The user interface element can have a descriptive identifier such as "on-demand" or "PayTV" or the name of a content provider.

In an embodiment according the invention, searching for an on-demand content source comprises contacting a SmartTV portal. A SmartTV portal can be a further server device, such as a website, administered by the TV manufacturer or another party, which maintains a database of content sources. It can also be a virtual server, as part of a cloud service. Use of a SmartTV portal has the advantage that the media device or media system itself does not need to maintain an up-to-date database of searchable content sources.

In an embodiment according the invention, the user interface element is a selectable button. In an embodiment according the invention, the user interface element controls switching a channel of the media device. If the subject matter of the message relates to a television program that is currently being broadcast on one of the channels available on the media system, the user can thus easily "zap" to the referenced program.

The user interface element (e.g. a "play" button) can thus start various types of content. Among others, It can switch channels on the TV and zap to another broadcast channel. It can start a video-on-demand title that is streamed via broadcast using the CAM module. It can also start a website that basically streams the content over-the-top (OTT) over the Internet. To clearly identify the source to the user, multiple user interface elements may be provided, e.g. a "play channel", "play VoD", "play OTT", etc. At the cost of using more display area for the user interface elements, the user is advantageously better informed about the source of the related available broadcasts and/or streams. Alternatively, to advantageously save available display area, all sources can be available from a single user interface element (e.g. a single "play" button).

In an embodiment according the invention, identifying a topic of the message comprises checking a prefix of a word or phrase in the message.

In an embodiment according the invention, a first type of user interface element indicates the availability of broadcasting content, and a second type of user interface element indicates the availability of on-demand content.

The invention further provides a method for displaying a message, the method comprising
- receiving a message;
- identifying at least one topic in the message;
- searching available content matching the topic; and
- providing a user element for selecting matching available content.

The method can be combined with any of the additional features as described above in reference to a media device according an embodiment of the invention. The method can be implemented on a single device (a media device such as a television or a STB) or in a distributed, client-server, manner. In the latter case, a server device implements the receiving, identifying, and searching steps. The results are communicated to a receiving media device for providing the user element and handling the user interaction. The communication from the server includes the references to matching content that allows the media device to start receiving the matching content.

The invention further provides a storage medium comprising machine readable instructions which, when executed on a processing unit of a media device, causes the media device to function as described in reference to the above embodiments.

### Brief description of the Figures

On the attached drawing sheets,
- figure 1a schematically shows a media system comprising a television according to an embodiment of the invention;
- figure 1b schematically shows a media system comprising a television and a server device according to an embodiment of the invention;
- figures 2a and 2b each schematically show a method for providing an enhanced list of messages according to respective embodiments of the invention; and
- figure 3 schematically shows a display of enhanced messages according to an embodiment of the invention.

### Detailed description

The following exemplary embodiments show the use of a television as media device. However, the invention is not limited to televisions. As mentioned before, the invention can also be implemented in a general media device, such as a set-top-box, a game console, etc.

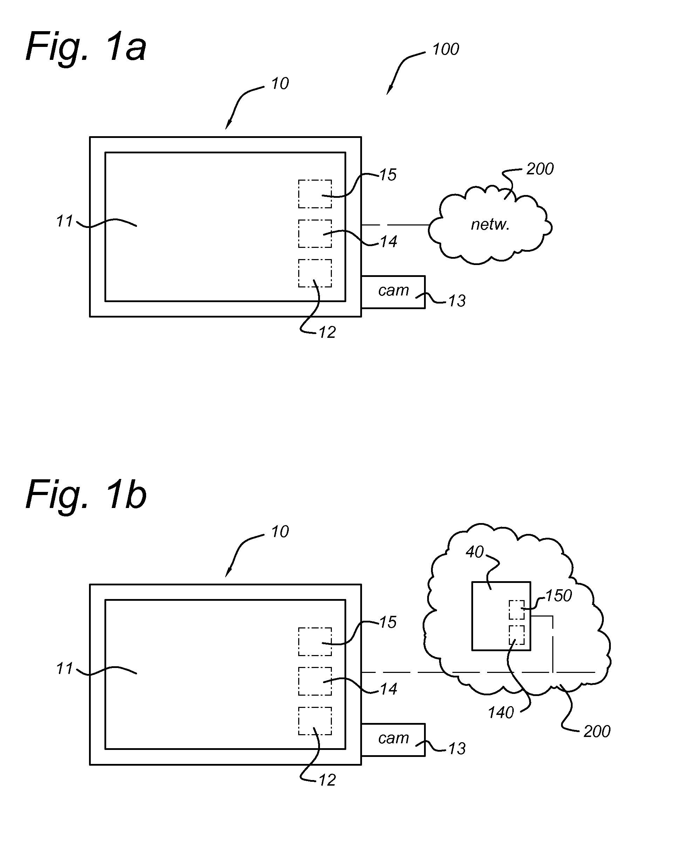

Figure 1a schematically shows a media system 100 comprising a television 10 according to an embodiment of the invention. The television 10 comprises a display 11, an interface unit 12, for example a Common Interface (CI) or Common Interface Plus unit for connecting with a Conditional Access Module (CAM) 13. The CAM 13 will typically be provided by a (cable or satellite television) operator, usually in the form of a Cl-compatible module that receives a smart card with subscriber details.

The television 10 further comprises a processing unit 14 and a network interface 15. The processing unit is configured to execute software, for example firmware as provided by the TV manufacturer or application software provided on the CAM or downloaded from the TV manufacturer, CAM provider, or a third party. The network interface 15 can connect with an external network 200, such as the internet. The interface 15 can for example be an Ethernet or WiFi interface. It may also comprise short range connection interfaces, such as Bluetooth or infrared.

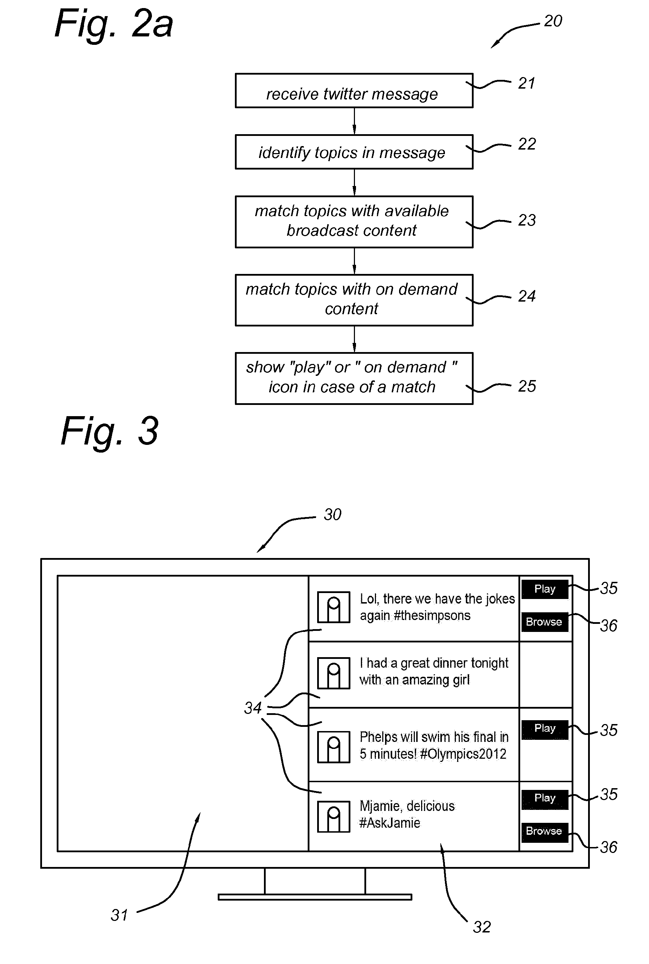

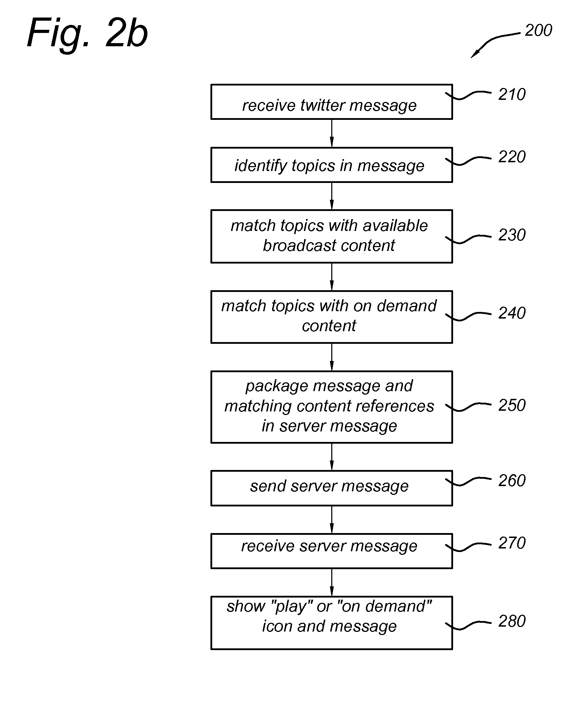

Figure 1b schematically shows a further media system 110 according to the invention. In the example of figure 1a, the media system 100 essentially comprises a single device, the television 10. More generally, the single device can also be a STB or game console connected to a display. In the example of figure 1b, the media system 110 comprises a media device (television 10) and a server device 40. The media device 10 and server device 40 are connected via network 200. The server device 40 comprises a network interface 150 and a processing unit 140. In the distributed system of figure 1b, the client and server devices cooperate to implement the invention, as will be described in more detail in reference to figures 2a and 2b.

Figure 2a schematically shows a method 20 for providing an enhanced list of messages according to an embodiment of the invention. This method can be implemented in software to be executed on the processing unit 14 of the television 10 (more generally, on a media device). In this exemplary embodiment, the example of Twitter messages, or "tweets", will be used. Tweets use the mechanism of a hash ("#") prefix, also called hash-tag, to indicate that a tweet refers to a certain topic. However, the invention is applicable to any type of message, not just to tweets. Preferably, the topic(s) of the messages is/are identified through a known protocol (such as the above described hash-tags for tweets). However, it is also possible to determine the topic(s) of a message by analysing the content of messages.

In action 21, a twitter message is received by the television 10 from the network 200. The message may be received using the regular Twitter API (Application Programming Interface). The one or more topics of the received message are identified in action 22 by selecting the words or expressions preceded by a hash-tag. In general, the topics may be identified through any algorithm suitable for the type of message received.

Next, the topics are matched against available content. In action 23, the television searches broadcasting content for the identified topics. This searching may comprise searching through an Electronic Program Guide (EPG). It may comprise searching through Service Information data received through an appropriate Digital Video Broadcasting (DVB) standard.

Examples of broadcasting content are analog and digital TV broadcasting, e.g. DVB, but also broadcasting made available via the internet (e.g. IPTV) and certain forms of PayTV.

In action 24, other content sources are searched for available content. Video on Demand content available via the CAM 13, for example via a CAM application, may be searched. On-demand content which is freely available on the internet may be searched. The search may comprise connecting to a Smart TV portal or web site via network 200, so that the Smart TV portal will return relevant content references. The Smart TV portal can be made available by the TV manufacturer, to provide (searchable) audio and video content, firmware updates, news, etc to users of a television 10. It is also possible to search third party content databases, such as YouTube, video-on-demand providers, catch-up TV providers, etc.

Examples of on-demand content are "catch-up TV" (sometimes called "watch again") services (i.e. services allowing one to watch recently broadcast content at a later date), on-line movie and TV series catalogues, certain forms of PayTV, on-line content on the internet (e.g. YouTube), etc.

If either or both of the actions 23, 24 result in a match, the message will be displayed with an appropriate icon to make the matched content available (see figure 3 for an example). For example, in action 25 the message is shown with a "play" button next to it to allow the user to switch to a channel or service which (currently) shows content corresponding to a topic of the message. In an alternative embodiment, the icon shows a descriptive text such as "switch to live broadcast" or "switch to channel X" where X is the corresponding channel number or identifier. It can be advantageous to separate broadcasting content from on-demand content by providing two separate buttons for either type of content (to avoid confusion by the user). The button "on-demand" would then be used to switch to the on-demand content.

The displayed buttons can be selected and/or activated using standard user interface means of the television.

Figure 2b schematically shows a client-server implementation 200 of the method of figure 2a. Actions 210, 220, 230, and 240 correspond to steps 21, 22, 23, and 24 respectively, but are now implemented on server device 40 (see figure 1b). In step 250, the server device prepares a server message comprising the received twitter message of action 210 and any references to matching content that were found in the actions 220-240. The server message is sent to the media device 10 in action 260.

The "server message" is a general a piece of data. The transfer of the message is either initiated by the server device (pushing) or by the receiving media device (polling). The server message can be considered an annotated (twitter) message, the annotations comprising the references to matching content. The server message can also be a container comprising a plurality of such annotated messages. The server message (as standalone annotated message or container) can be formatted using XML or HTML.

Switching to the perspective of the media device 10, in action 270 the server message is received. The media device can then interpret the message and perform action 280 to provide the user element. Action 280 corresponds closely to action 25 of figure 2a.

It is noted that figure 2b discloses but one client-server implementation of the general method of figure 2a. For example, it is also possible that the server device implement on steps 210 or only steps 210 and 220, leaving the rest to the media device. This is for example advantageous if the server device has no detailed knowledge of the content sources that are available to the media device. The server device can than support the media device by aggregating messages and identifying topics, but the media device itself must find matching content.

Figure 3 schematically shows a display 30 of enhanced messages 34 according to an embodiment of the invention. The image 30 on the display 11 of television 10 is separated in two parts, a video part 31 showing whatever content is currently being received, and a message part 32 showing the received messages 34 (in this case a twitter feed). Most recent messages may be shown on top or at the bottom. As new messages 34 come in, older messages disappear from view. A scrolling or page-turning means can be provided to bring these older messages back into view.

If a match for broadcasting content was found for a message 34, a play button 35 is shown. Selection of the play button will cause the television to tune to the channel or service providing the matching broadcasting content.

If a match for on-demand content was found for a message 34, a browse button (may also be labelled with "on-demand" or any other suitable text, for example a text identifying the source such as YouTube, PayTV, etc) 36 is shown. If the browse button is selected by the user, an appropriate action is started. Depending on the matched content, the action may comprise starting an application on the CAM to start receiving PayTV content, contacting a SmartTV portal to start receiving on-demand content, such as free-to-air content, contacting a third party server via the internet to start receiving on-demand content, etc.

In the foregoing description of the figures, the invention has been described with reference to specific embodiments thereof. It will, however, be evident that various modifications and changes may be made thereto without departing from the scope of the invention as summarized in the attached claims.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. Media system (100, 110) comprising a processing unit (14, 140) and a network interface (15, 150) for connecting to a network (200), wherein the processing unit (14, 140) is configured to:
- receive a message (34) from the network (200);
- identify at least one topic in the message; and
- search content sources for content matching the at least one identified topic, wherein the media system is configured to:
- provide a user interface element (35, 36) for allowing a user to instruct the media system to start receiving the content matching the at least one identified topic.

2. Media system (100) according to claim 1 comprising
- a media device (10), such as a television,
wherein the media device comprises the processing unit (14) and the network interface (15).

3. Media system (110) according to claim 1 comprising
- a media device (10), such as a television, and
- a server device (40), such as web-server device,
the server device (40) comprising the processing unit (140) and the network interface (150), wherein the server device is configured to send a server message comprising the message and a reference to matching content to the media device, and wherein the media device is configured to provide the user interface element.

4. Media system (100, 110) according to any of the previous claims, comprising a display (11), wherein the media system is configured to display the message and the user interface element (35, 36) on the display.

5. Media system (100, 110) according to any of the previous claims, wherein the processing unit (14, 140) is configured to search a broadcasting content source.

6. Media system (100, 110) according to any of the previous claims, wherein the processing unit (14, 140) is configured to search an on-demand content source, such as through a SmartTV portal server via the network (200).

7. Media system (100, 110) according to any of the previous claims, comprising a Conditional Access Module, CAM, (13), wherein searching an on-demand content source comprises starting a CAM application.

8. Media system (100, 110) according to any of the previous claims, wherein the user interface element controls switching a channel.

9. Media system (100, 110) according to any of the previous claims, wherein identifying a topic of the message comprises checking a prefix of a word or phrase in the message.

10. Media system (100, 110) according to any of the previous claims, wherein a first type of user interface element (35) indicates the availability of broadcasting content, and a second type of user interface element (36) indicates the availability of on-demand content.

11. Media device (10) for use in a media system (100, 110) according to any of the claims 1-10.

12. Server device (40) for use in a media system (110) according to claim 3 or any of the claims 4-10 dependent on claim 3.

13. Method (20, 200) for displaying a message, the method comprising
- receiving (21,210) a message;
- identifying (22, 220) at least one topic in the message;
- searching (23, 230, 24, 240) available content matching the topic; and
- providing (25, 280) a user element for selecting matching available content.

14. Method according to claim 13, combined with any of the additional features of claims 1-10.

15. Storage medium comprising machine readable instructions which, when executed on a processing unit (14) of a media system (100, 110), causes the media system (100, 110) to function according to any of the claims 1-10.
